# EUROPÄISCHE PATENTSCHRIFT

(11) **EP 0 388 685 B1**
(45) Veröffentlichungstag und Bekanntmachung des Hinweises auf die Patenterteilung: **19.05.1993**
(21) Anmeldenummer: 90104088.1
(22) Anmeldetag: 02.03.1990
(51) Int. Cl.: C04B 37/02

(54) **Verfahren zum Verbinden von Oxidkeramik und Metall sowie hierdurch hergestelltes Werkzeug**
Process for joining oxide ceramics and metal and tool produced hereby
Procédé de liaison de céramique oxydée et métal et outil produit suivant ce procédé

(30) Priorität: 20.03.1989 DE 3909088
(43) Veröffentlichungstag der Anmeldung: 26.09.1990
(73) Patentinhaber: KERNFORSCHUNGSZENTRUM KARLSRUHE GMBH, D-76050 Karlsruhe (DE)
(72) Erfinder: Heinzel, Volker, Dr., D-7515 Linkenheim (DE); Keschtkar, Hossein, Dr., D-7500 Karlsruhe (DE); Schumacher, Gustav, Dr., D-7500 Karlsruhe 31 (DE); Huber, Rolf, D-7500 Karlsruhe (DE); Schub, Ingeborg, D-6729 Wörth 2 (DE)

(56) Entgegenhaltungen:
- EP-A- 0 038 072

## Beschreibung

Die Erfindung betrifft ein Verfahren zum Verbinden einer Komponente aus Oxidkeramik mit einer metallischen Komponente, entsprechend dem Oberbegriff des 1. Patentanspruches und ein Werkzeug, bestehend aus einer Komponente aus einem Metall der 6. Nebengruppe, bei dem die beiden Komponenten durch eine Zwischenschicht verbunden sind.

Oxidkeramische Werkstoffe zeichnen sich gegenüber den Metallen durch ihre Härte, Verschleißfestigkeit und Temperaturbeständigkeit sowie durch höhere Beständigkeit gegen Erosion und Korrosion aus. In vielen Fällen stehen jedoch ihrem Einsatz im Maschinenbau und in der Verfahrenstechnik die nachteiligen Eigenschaften wie Sprödigkeit, geringe Biegebruchfestigkeit und Temperaturwechselbeständigkeit im Wege. Deshalb gibt es besonders in der letzten Zeit große Anstrengungen die Eigenschaften von Keramik und Metall zu verbinden, um die Vorzüge beider Materialien besser nutzen zu können. Das führte zur Entwicklung von Verbundwerkstoffen und keramischen Überzügen auf Metallen sowie zu Verbindungen zwischen keramischen und metallischen Bauteilen. Ein bekanntes Beispiel für die Verbindungstechnik ist der Einsatz von keramischen Schneidplatten auf einem metallischen Werkzeugträger.

Aus "A Review of Oxide, Silicon Nitride, and Silicon Carbide Brazing" von M. L. Santella und A. J. Moorhead, Oak Ridge National Laboratory, USA, CONF-870981--1, sind Löt-Verfahren zur Verbindung von Oxidkeramiken wie Aluminiumoxid und Zirkondioxid mit Metallen bekannt. Als Beispiel wird die Verbindung von Keramik mit Gußeisen erwähnt. Verbindungen zwischen Oxidkeramiken und Metallen der 6. Nebengruppe (Chrom, Molybdän, Wolfram) werden nicht angesprochen.

In dieser Veröffentlichung wird darauf hingewiesen, daß die Keramik mit einer benetzenden Metallisierungsschicht überzogen werden muß. Als benetzende Schicht kommen prinzipiell die Elemente Titan, Zirkonium, Aluminium, Lithium und besonders deren Legierungen infrage.

Es wird weiterhin darauf hingewiesen, daß die meisten dieser Legierungen nicht für die kommerzielle Anwendung entwickelt wurden.

In der gleichen Veröffentlichung wird eine Ausgleichsschicht vorgeschlagen, die zwischen die erste (Metallisierungs-) Schicht und die dritte (Löt-) Schicht eingebracht wird, um Unterschiede in den thermischen Ausdehnungskoeffizienten von Metall und Keramik auszugleichen. Als Material für eine solche Schicht werden u. a. Wolfram und Titan vorgeschlagen.

Aus H. W. Grünling, "Hochtemperaturbeständige Keramik-Metall-Verbindungen", Schweißen + Schneiden, Jahrgang 25 (1973), Heft 2, Seiten 52 bis 55 ist der Verbund von Werkstoffen aus Al₂O₃-Keramik und Wolfram, Molybdän oder Niob bekannt, der auf folgende Weise hergestellt wurde:

Auf der Keramikschicht wird durch Gasphasenabscheidung eines dünnen Niob- oder Wolframfilms eine elektrisch leitende Metallisierungsschicht erzeugt, die durch eine aus einer Fluoridschmelze bei 740° C abgeschiedene Niobschicht überdeckt wird. Auf diese Schicht werden hochtemperaturbeständige Metalle wie Wolfram, Molybdän oder Niob aufgelötet.

Als Nachteil wird das aufwendige Fertigungsverfahren angegeben.

Aus dieser Veröffentlichung geht weiter hervor, daß auf das Metallisieren der Keramik verzichtet werden kann, wenn man Aktivlote aus Titan und Zirkonium oder deren Legierungen mit Kupfer oder Silber verwendet.

Charakteristisch für diese Aktivmetalle ist ihre große Affinität gegenüber Sauerstoff, durch die die günstigen Bindeeigenschaften erklärt werden.

Gleichzeitig wird darauf hingewiesen, daß diese Aktivmetalle bevorzugt spröde intermetallische Phasen mit dem Metallpartner bilden, wodurch die Verbindung gegen Wärmespannungen empfindlich wird, und daß die Lote die Neigung zeigen, sich über die ganze Oberfläche der Keramik auszubreiten, wodurch die Begrenzung des Lotes auf die Fügestelle erschwert, vielfach sogar verhindert wird. Deshalb wird die Verwendung von komplexen, im Benetzungsverhalten abgestimmten Loten empfohlen.

Aus K. Suganuma, T. Okamoto und M. Koizumi, "Effect of Inter-layers in Ceramic-Metal Joints with Thermal Expansion Mismatches", Communinizations of the American Ceramic Society, December 1984, p. C-256 - C-257 ist ferner eine Niob-Ausgleichsschicht bekannt geworden. Diese Schicht wird jedoch zur Verbindung von Stahl und Keramik vorgeschlagen.

Weiterhin sind zur Herstellung der Verbindung von Stahl und Keramik mit der Niob-Ausgleichsschicht Drücke von 100 MPa erforderlich.

Der Erfindung liegt die Aufgabe zugrunde, ein Verfahren zur Herstellung eines Werkzeugs anzugeben, in dem die günstigen Eigenschaften von Metall und Keramik kombiniert sind. Die Keramik soll durch ein hartes Metall wirkungsvoll unterstützt werden, wobei die Verbindungsstelle von Keramik und hartem Metall in der Lage ist, die unterschiedliche Temperaturausdehnung zu kompensieren. Das Werkzeug soll durch ein einfaches Verfahren mit einem einzigen Verfahrensschritt herstellbar sein. Inbesondere soll das Verfahren keine Anwendung hoher Drücke und somit einer Hochdruck-Preßvorrichtung bedingen. Die Verbindung soll temperaturwechselbeständig sein und nicht zur Ausbildung von Sprödphasen neigen.

Die Aufgabe wird erfindungsgemäß durch ein Verfahren mit den im Kennzeichen des ersten Patentanspruches und durch ein Werkzeug mit den im Kennzeichen des siebten Patentanspruches aufgeführten Merkmalen gelöst.

Die Erfindung schlägt ein einfaches Verfahren vor, um Metalle der 6. Nebengruppe, insbesondere Wolfram, mit Oxidkeramiken, insbesondere Aluminiumoxid zu verbinden. Dabei ist es im Gegensatz zum Stand der Technik unerheblich, ob das Aluminiumoxid rein oder als Mischkristall mit anderen Stoffen vorliegt. Als oxidkeramik kann auch Zirkonoxid mit Zusätzen von oxiden, Karbiden, Boriden und Nitriden verwendet werden

Bei der Verwendung von Metallpulver sollte die Schichtdicke der ersten und dritten Schicht etwa bis zu 100 µm betragen.

In einer bevorzugten Ausführungsform des erfindungsgemäßen Verfahrens werden für die erste und dritte Schicht Folien einer amorphen Ni/Ti-Legierung verwendet.

Die Dicke der Folien für die erste und dritte Schicht sollte 30 µm nicht übersteigen. Dünnere Schichten erweisen sich als vorteilhaft. Eine untere Grenze für die Folienschichtdicke bildet die Oberflächenrauhigkeit der Komponenten, insbesondere der Oxidkeramik.

Für die Dicke der Niobschicht kann als Bemessungsgrundlage ein Wert von 50 µm zuzüglich der Folienstärke der ersten Schicht angenommen werden. Gute Ergebnisse werden jedoch auch mit etwas dickeren Folien, etwa bis 100 µm, erzielt.

Die Folien sollten in ihrer Struktur amorph sein; sie werden beispielsweise nach dem in der Offenlegungsschrift DE 35 18 706 beschriebenen Verfahren aus amorphen Pulvern geeigneter Zusammensetzung gepreßt und gesintert. Vorteilhaft ist hierbei, daß die Folien mit einer Schere auf das gewünschte Maß zugeschnitten werden können.

Als Material für die erste und dritte Zwischenschicht wird eine amorphe Nickel/Titan-Legierung verwendet, die 35 bis 60 Atom-% Nickel enthält.

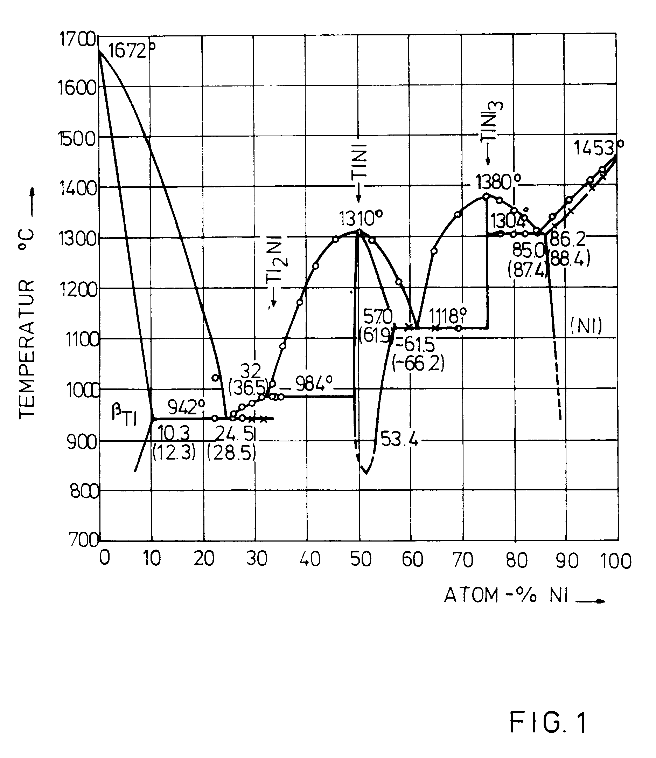

Fig. 1 zeigt das Schmelzdiagramm des Systems Nickel/Titan.

Diesem Schmelzdiagramm kann der jeweilige Schmelzpunkt der Legierung entnommen werden.

Bei der erfindungsgemäßen Legierungszusammensetzung wird einerseits die Ausbildung von Sprödphasen, die sich insbesondere bei einem Nickel-Anteil von etwa 25 bis 30 % ausbilden, weitgehend ausgeschlossen; andererseits ist der Schmelzpunkt gegenüber dem bekannten TiNi₃-Lot deutlich vermindert. Besonders bevorzugt ist der Bereich, der der Flanke der Schmelzpunktskurve zwischen etwa 35 und 45 Atom-% Nickel entspricht. Gut geeignet ist eine Legierung, die 40 Atom-% Nickel und 60 Atom-% Titan enthält.

Als Ausgleichsmaterial zur Kompensation der verschiedenen Ausdehnungkoeffizienten von Keramik und dem Metall der 6. Nebengruppe eignet sich reines Niob oder Niob-Basislegierungen in Folienform, soweit durch Legierungszusätze die plastischen Eigenschaften von Niob nicht wesentlich verschlechtert werden.

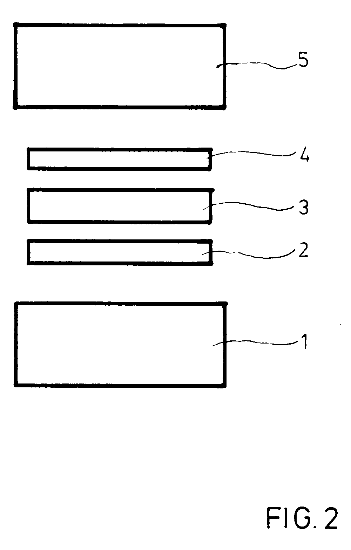

Fig. 2 zeigt die erfindungsgemäße Anordnung von Komponenten und Zwischenschichten.

Auf eine Komponente aus Oxidkeramik 1 wird eine Ni/Ti-Folie 2 geeigneter Größe aufgelegt. Auf dieser Folie wird eine Folie aus Niob oder einer Niob-Basislegierung 3 aufgelegt, die von einer weiteren Ni/Ti-Folie 4 abgedeckt wird.

Die Größe und Anordnung der Folien entspricht der gewünschten Verbindungsfläche der keramischen und der metallischen Komponente 5.

Auf die letztgenannte Folie wird die metallische Komponente 5 aufgelegt.

Auf die metallische Komponente wird ein Gewicht, das einen Druck von mindestens 0,2 MPa auf die Verbindungsstelle ausübt, aufgelegt, sofern das Eigengewicht der metallischen Komponente nicht ausreicht.

Der Druck kann auch durch eine einfache Preßvorrichtung ausgeübt werden. Eine Hochdruck-Preßvorrichtung ist unnötig.

Die Anordnung der Komponenten und Folien kann in einem Graphit-Induktionsofen erfolgen, der bei geeigneter Geometrie zugleich ein Verschieben der Anordnung verhindert.

Anschließend wird die Anordnung unter Schutzgasatmosphäre zumindest auf die Schmelztemperatur der Ni/Ti-Legierung, vorzugsweise auf etwa 1255° bis 1300° C, aufgeheizt. Die Heizzeit beträgt etwa 30 Sekunden.

Die verbundenen Komponenten werden langsam abgekühlt und der Heizvorrichtung entnommen.

Die Erfindung wird im folgenden anhand eines Durchführungsbeispiels näher erläutert.

### Beispiel

Von einem Schneidplättchen aus Al₂O₃ mit TiC wurde ein Stück mit den Dimensionen 2 x 2 x 8 mm³ mit einer Diamantsäge abgetrennt. Ebenso wurde aus einem Wolfram-Band ein Teil mit den Abmessungen 2 x 2 x 8 mm³ abgesägt.

Aus 40 % Ni, Rest Titan wurden entsprechend der DE-OS 35 18 706 zwei Folienstücke der Dimension 2 x 8 mm² hergestellt. Die Dicke der Folien betrug 30 µm. Aus einer Niob-Folie der Dicke 100 µm wurde ein Teilstück mit 2 x 8 mm² herausgeschnitten.

Die Verbindung der Wolfram-Komponente mit der Keramik-Komponente erfolgte in einer Lötvorrichtung.

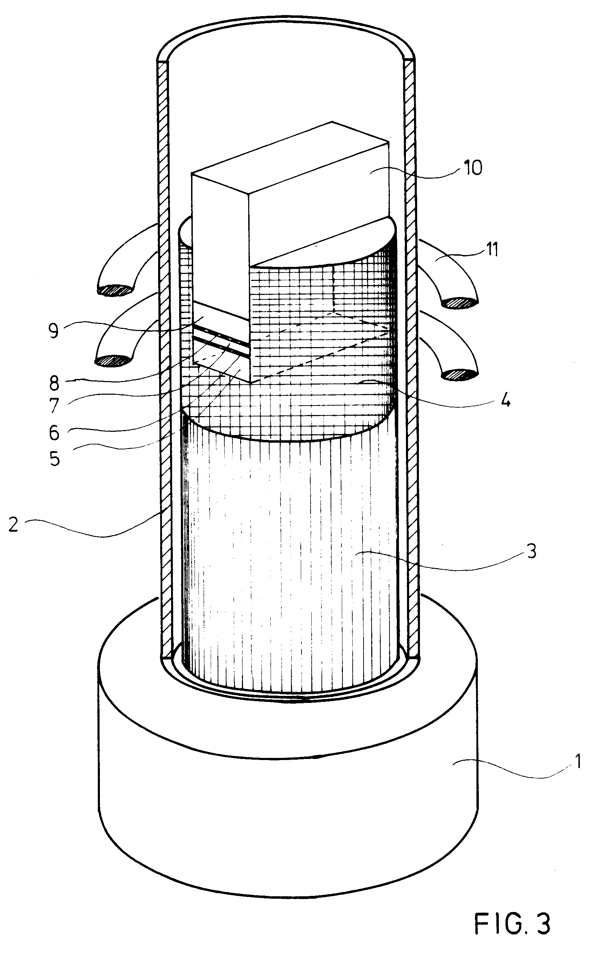

Fig. 3 zeigt den Aufbau dieser Lötvorrichtung.

Auf einer Grundplatte 1 aus Stahl ist ein Quarzrohr 2 befestigt. Der untere Teil des Quarzrohrs ist mit einem Zylinder 3 aus Al₂O₃ gefüllt, der als thermische Isolation dient. Auf diesem Isolator steht ein Zylinder aus Graphit 4, der in seinem oberen Ende einen Paßschlitz zur Aufnahme der Komponenten und der Folienstücke enthält. In diesem Paßschlitz werden die Wolfram-Komponente 5, die amorphe Ni/Ti-Folie 6, die Niob-Folie 7, eine weitere Ni/Ti-Folie 8 und die Keramik-Komponente 9 eingelegt und durch einen passenden Stempel 10, der einen Druck von 0,2 MPa ausübt, beschwert.

Die Graphit-Matrize 4 hält die zu lötenden Teile in ihrer Position und führt den Preßstempel 10.

Die Matrize 4 selbst ist von einem (in der Figur nicht dargestellten) Graphit-Suszeptor umgeben, in dem mittels einer Hochfrequenz-Spule 11 die erforderliche Heizleistung erzeugt wird. Als Heizung könnte jedoch auch eine Widerstandsheizung verwendet werden. Das Quarzglasrohr 2 enthielt während des Lötprozesses eine Argonatmosphäre.

Die Löttemperatur im Bereich von 1255 bis 1300° C wird mit einer Aufheizrate von 100° C/min angefahren. Es hat sich bewährt, bei etwa 1000° C eine Haltezeit von 10 min für einen guten Temperaturausgleich vorzusehen. Bei der Löttemperatur ist eine Standzeit von wenigstens 5 Sekunden einzuhalten. Standzeiten bis zu 3 Minuten liefern gute Ergebnisse.

Als minimaler Anpreßdruck sind 0,2 MPa vorzusehen. Bevorzugt wird jedoch ein Druck im Bereich von 0,35 bis 0,7 MPa. Diese Drücke werden durch Auflegen eines Gewichtes zu Beginn des Lötprozesses erzeugt. Verwendet man eine Presse, so genügt es, den Druck erst oberhalb von 1000° C aufzubringen.

Nach Ende der Lötstandzeit wird innerhalb von etwa 2 Minuten auf 1000° C abgekühlt. Damit werden die Legierungsvorgänge in der Lötzone möglichst definiert beendet. Mit einer Haltezeit von wenigen Minuten bei 1000° C wird jedoch nochmals eine Möglichkeit für den Spannungsausgleich geschaffen.

Anschließend wird die Temperatur bei einer Rate von 50° C/min erniedrigt und die erhaltene Probe der Matrize entnommen.

Die Temperaturüberwachung erfolgt mit Hilfe eines eingebauten Thermoelements.

Von der auf diese Weise hergestellten Probe wurde ein Schliffbild angefertigt.

In unmittelbarer Nachbarschaft zum Wolfram befinden sich zwei Zonen, die aus einer W-Co-Ni-Legierung bestehen. Niob ist also durch die flüssige Lotphase zur Wolfram-Cobalt-Legierung gelangt. Es schließt sich eine zweiphasige Zone (Zone 3) an, in der Körner mit ca. 70 At% Niob in eine Phase mit weniger als 50 At% Niob eingebettet sind, die außerdem noch 40 At% Ni-Ti enthält.

Eine 4. Zone entstand durch Lot, das entlang der Korngrenzen in das Niob eingedrungen ist. Der Angriff bleibt jedoch begrenzt, so daß schließlich ein Rest von reinem Niob (Zone 5) vorhanden ist. In Nachbarschaft zum Aluminiumoxid gibt es wieder eine mehrphasige Struktur. Die Zusammensetzung entspricht etwa der der Zone 3. Darin sind jedoch noch ca. 10 At.-% Aluminium gelöst.

Zonen 1 und 2 besitzen eine Härte, die nahe der der reinen Wolfram/Kobalt-Legierung ist. Zone 3 kann mit einer Vickershärte von 5592 MPa [570 kp/mm²] als hart, jedoch noch nicht als Sprödphase bezeichnet werden. Zone 4 kommt mit 2747 MPa [280 kp/mm²] nahe an die Härte des reinen Niobs mit 1128 MPa [115 kp/mm²].

In der dem Aluminiumoxid benachbarten Zone wurde eine Härte von ca. 7848 MPa [800 kp/mm²] gemessen. Bei allen Härtemessungen ergab sich aus der Vermessung der Diagonalen des Pyramidenabdrucks kein Hinweis auf innere Spannungen im Kontaktbereich zu der spröden Oxidkeramik.

Die Erniedrigung der Arbeitstemperatur sowie verkürzte Standzeiten oberhalb des Lotschmelzpunktes ergaben, daß es möglich ist, die Ausdehnung der härteren Zonen 3 und 6 zu reduzieren sowie deren Härte auf etwa 5886 MPa [600 kp/mm²] in Zone 6 zu verringern.

Die Untergrenze der Löttemperatur ergab sich zu 1255° C bei einem Anpreßdruck von 0.2 MPa. Der Mindestdruck von 0.2 MPa ist erforderlich, um Gasblasen, die beim Schmelzen des Lots eingeschlossen wurden, aus dem Lotbereich zu drücken. Gleichzeitig bewirkt der Druck einen gleichmäßigen Kontakt und damit eine gleichmäßigere und schnellere Reaktion des Lots mit der Keramik, die langsamer abläuft als die Legierungsbildung mit dem Niob.

Durch Anwendung höherer Drücke kann die Arbeitstemperatur noch weiter verringert werden. Außerdem wird durch einen höheren Anpreßdruck Lot aus dem Nahtbereich gedrückt und die Möglichkeit zur Sprödphasenbildung reduziert. Von Vorteil ist in diesem Zusammenhang, wenn noch dünnere Folien des Lots verwendet werden.

## Patentansprüche

1. Verfahren zum Verbinden einer Komponente aus Oxidkeramik mit einer metallischen Komponente, bei dem
a) auf der Oxidkeramik eine erste metallische Schicht aus einer Titanlegierung aufgebracht wird,
b) die erste metallische Schicht mit einer zweiten metallischen Schicht überdeckt wird,
c) die metallische Komponente mit Hilfe einer dritten metallischen, Nickel und Titan enthaltenden Schicht aufgelötet wird,
dadurch gekennzeichnet, daß
d) als metallische Komponente eine Komponente aus einem Metall oder einer Metall-Basislegierung der 6. Nebengruppe verwendet wird,
e) für die erste und dritte Schicht pulverförmiges Nickel und pulverförmiges Titan in einem Verhältnis 35 bis 60 Atom-% Nickel, Rest Titan, vermischt werden,
f) als zweite Schicht eine Folie aus Niob oder einer Niob-Basislegierung verwendet wird,
g) die Verbindung der Komponente aus Oxidkeramik mit der Oberfläche der metallischen Komponente über die dazwischen liegenden Schichten in einem einzigen Verfahrensschritt hergestellt wird, indem
- die Komponenten und die metallischen Schichten in der angegebenen Weise übereinander angeordnet werden,
- an der Verbindungsstelle der Komponenten ein Druck von mindestens 0,2 MPa erzeugt wird,
- die Komponenten durch Aufheizen auf eine Temperatur, die mindestens der Schmelztemperatur der ersten und der dritten Schicht entspricht, unter Schutzgasatmosphäre miteinander verbunden werden.

2. Verfahren nach Anspruch 1, dadurch gekennzeichnet, daß als Oxidkeramik reines Aluminiumoxid verwendet wird.

3. Verfahren nach Anspruch 1, dadurch gekennzeichnet, daß eine Oxidkeramik aus Aluminiumoxid mit Zusätzen von Oxiden, Karbiden, Boriden und Nitriden verwendet wird.

4. Verfahren nach Anspruch 1, dadurch gekennzeichnet, daß eine Oxidkeramik aus Zirkonoxid mit Zusätzen von Oxiden, Karbiden, Boriden und Nitriden verwendet wird.

5. Verfahren nach einem der Ansprüche 1 bis 4, dadurch gekennzeichnet, daß als erste und dritte Schicht eine Folie aus amorpher Ni/Ti-Legierung mit 35 bis 60 Atom-% Nickel, Rest Titan, eingesetzt wird.

6. Verfahren nach einem der Ansprüche 1 bis 5, dadurch gekennzeichnet, daß die erste und dritte Schicht aus 40 Atom-% Nickel und 60 Atom-% Titan besteht.

7. Verfahren nach einem der Ansprüche 1 bis 6, dadurch gekennzeichnet, daß die zu verbindenden Komponenten während der Herstellung der Verbindung durch Auflegen eines geeigneten Gewichts zusammengepreßt werden.

8. Werkzeug, bestehend aus einer Komponente aus Oxidkeramik und einer metallischen Komponente aus einem Metall der 6. Nebengruppe, bei dem die beiden Komponenten durch eine Zwischenschicht verbunden sind, dadurch gekennzeichnet, da die Zwischenschicht aus zwei Lagen einer Nickel-Titan-Legierung mit 35 bis 60 Atom-% Nickel und einer dazwischen angeordneten Lage aus Niob oder einer Niob-Basislegierung besteht, wobei die Lagengrenzen durch Übergangszonen miteinander verbunden sind.

## Claims

1. Technique for bonding a component made of oxide ceramic with a metallic component with
(a) a first layer made from a titanium alloy applied onto the oxide ceramic,
(b) the first metallic layer covered by a second metallic layer,
(c) the metallic component soldered on by means of a third metallic layer containing nickel and titanium,
characterized in that
(d) a component made of a metal or metal base alloy of the 6. subgroup is used as the metallic component;
(e) nickel powder and titanium powder, mixed at a ratio of 35 to 60 at.% nickel and 65 to 40 at.% titanium, are used for the first and third layers;
(f) a foil of niobium or niobium base alloy is used to constitute the second layer;
(g) the bonding of the component made of oxide ceramic with the surface of the metallic component is effected in one single process step via the layers in-between, by
. arranging the components and the metallic layers one above the other in the manner indicated;
. generating at the point of bonding of the components a pressure of at least 0.2 MPa;
. bonding the components in cover gas atmosphere by heating them to a temperature corresponding to at least the melting temperature of the first and third layers.

2. Technique as claimed in 1 with pure alumina used as oxide ceramic.

3. Technique as claimed in 1 with an oxide ceramic used which is made of alumina with oxides, carbides, borides and nitrides added.

4. Technique as claimed in 1 with an oxide ceramic used which is made of zirconium oxide with oxides, carbides, borides and nitrides added.

5. Technique as claimed in 1 through 4 with a foil made of amorphous Ni/Ti alloy containing 35 to 60 at.% nickel and 65 to 40 at.% titanium used as the first and third layers.

6. Technique as claimed in one of the claims 1 to 5 with the first and third layers consisting of 40 at.% nickel and 60 at.% titanium.

7. Technique as claimed in one of the claims 1 through 6 with the components to be bonded compressed in the course of bonding by application of a suitable weight.

8. Tool consisting of a component made of oxide ceramic and a metallic component made of a metal of the 6. subgroup in which both components are bonded by an intermediate layer characterized in that the intermediate layer consists of two layers of a nickel-titanium alloy with 35 to 60 at.% nickel and a layer of niobium or niobium base alloy arranged in-between, with the ends of layers interconnected by transition zones.

## Revendications

1. Procédé de liaison d'un composant en céramique oxydée à un composant métallique dans lequel :
a) on applique sur la céramique oxydée une première couche métallique en alliage de titane,
b) on recouvre la première couche métallique avec une deuxième couche métallique,
c) on applique par brasage le composant métallique à l'aide d'une troisième couche métallique renfermant du titane et du nickel,
caractérisé en ce que,
d) on utilise comme composant métallique un composant en un métal ou en un alliage à base d'un métal du 6ème sous-groupe,
e) on mélange pour la première et la troisième couche, du nickel pulvérulent et du titane pulvérulent dans un rapport de 35 à 60 % en atomes de nickel, et le reste de titane,
f) on utilise comme deuxième couche, une feuille en niobium ou en alliage à base de niobium,
g) on produit la liaison du composant en céramique oxydée avec la surface du composant métallique sur les couches qui se trouvent entre les deux, en une étape de procédé unique, procédé dans lequel,
- on dispose les composants et les couches métalliques de la manière mentionnée, les uns au-dessus des autres,
- on produit, sur l'emplacement de la jonction des composants, une pression d'au moins 0,2 mPa,
- on lie les composés l'un à l'autre par chauffage jusqu'à une température qui correspond au moins à la température de fusion de la première et de la troisième couche, sous atmosphère de gaz protecteur.

2. Procédé selon la revendication 1, caractérisé en ce que comme céramique oxydée, on utilise de l'oxyde d'aluminium pur.

3. Procédé selon la revendication 1, caractérisé en ce que l'on utilise une céramique oxydée composée d'oxyde d'aluminium avec des additifs d'oxydes, de carbures, de borures et de nitrures.

4. Procédé selon la revendication 1, caractérisé en ce que l'on utilise une céramique oxydée composée d'oxyde de zirconium avec des additifs d'oxydes, de carbures, de borures et de nitrures.

5. Procédé selon l'une des revendications 1 à 4, caractérisé en ce que, comme première et troisième couches, on met en oeuvre une feuille en alliage amorphe Ni/Ti avec 35 à 60 % en atomes de nickel, le reste étant du titane.

6. Procédé selon l'une des revendications 1 à 5, caractérisé en ce que la première et la troisième couches se composent de 40 % en atomes de nickel et de 60 % en atomes de titane.

7. Procédé selon l'une des revendications 1 à 6, caractérisé en ce que les composants à lier sont pressés ensemble pendant la production de la liaison par application d'un poids approprié.

8. Outil constitué d'un composant de céramique oxydée et d'un composant métallique d'un métal du 6ème sous-groupe, dans lequel les deux composants sont reliés par une couche intermédiaire, caractérisé en ce que la couche intermédiaire consiste en deux couches d'un alliage nickel/titane ayant de 35 à 60 % en atomes de nickel et d'une couche disposée entre les deux en niobium ou d'un alliage à base de niobium, les limites de couche reliées entre-elles par des zones de transition.
